**Europäisches Patentamt**

**European Patent Office**

**Office européen des brevets**

(19)

(11) Veröffentlichungsnummer: **0 515 865 A2**

# (12) EUROPÄISCHE PATENTANMELDUNG

(21) Anmeldenummer: **92107420.9**

(22) Anmeldetag: **30.04.92**

(51) Int. Cl.5: **B60H 1/32**, F25B 17/08

(30) Priorität: **27.05.91 DE 4117337**
**27.05.91 DE 4117338**

(43) Veröffentlichungstag der Anmeldung:
**02.12.92 Patentblatt 92/49**

(84) Benannte Vertragsstaaten:
**DE FR GB IT**

(71) Anmelder: **Bayerische Motoren Werke Aktiengesellschaft**
**Patentabteilung AJ-30 Postfach 40 02 40**
**Petuelring 130**
**W-8000 München 40(DE)**

(72) Erfinder: **Höppler, Robert, Dr.**
**Kirchstrasse 19**
**W-8071 Karlskron(DE)**

(54) **Klimaanlage, insbesondere für Fahrzeuge, nach dem Sorptionsprinzip.**

(57) Eine Fahrzeug-Klimaanlage nach dem Sorptionsprinzip besitzt zwei zeolith-befüllte Sorptionsbehälter sowie einen Verdampfer für das als Sorptions-Arbeitsmittel fungierende Wasser. Während das Wasser aus einem der beiden Sorptionsbehälter ausgetrieben wird, nimmt der andere Sorptionsbehälter Wasserdampf auf. Die beiden Arbeitsmittel-Leitungen der beiden Sorptionsbehälter sind über einen gemeinsamen Wärmetauscher geführt, um die Kondensation des ausgetriebenen Arbeitsmittels zu beschleunigen. Angegeben ist darüber hinaus eine vorteilhafte Anordnung der beiden Sorptionsbehälter, des Verdampfers sowie des Wärmetauschers in Verbindung mit den Luftkanälen für die Klimatisierung des Fahrzeuges.

Fig. 1

EP 0 515 865 A2

Die Erfindung betrifft eine Klimaanlage, insbesondere für Fahrzeuge, nach dem Sorptionsprinzip, mit zumindest zwei beheizbaren, von einem Luftstrom beaufschlagten Sorptionsbehältern sowie einem mit diesen über Arbeitsmittel-Leitungen verbundenen ebenfalls luftdurchströmten Verdampfer für das Sorptions-Arbeitsmittel. Das technologische Umfeld ist in der DE 33 42 985 C2 beschrieben.

Eine nach einem Sorptionsprinzip arbeitende Klimaanlage nutzt den Effekt, daß das in einem Sorptionsbehälter befindliche Sorptionsmittel ein Arbeitsmittel begierig aufnimmt. In dieser sog. Sorptionsphase verändert das in einem externen Behälter befindliche flüssige Arbeitsmittel seinen Aggregatzustand und gelangt in dampfförmigem Zustand in den Sorptionsbehälter. Mit diesem Wechsel des Aggregatzustandes, der in einem als Wärmetauscher ausgebildeten Verdampfer erfolgt, wird der Umgebung des Verdampfer-Wärmetauschers Wärme entzogen. Ein durch den Verdampfer-Wärmetauscher geführter Luftstrom wird hierbei abgekühlt und kann zur Klimatisierung eines Fahrzeuges herangezogen werden. In einer bevorzugten Ausführungsform ist das Sorptionsmittel ein Zeolith und das Arbeitsmittel Wasser bzw. Wasserdampf.

Nachdem das in einem Sorptionsbehälter befindliche Sorptionsmittel die maximale Menge von Arbeitsmittel aufgenommen hatte, muß dieses Arbeitsmittel durch Erhitzen des Sorptionsmittels wieder ausgetrieben und dem externen Sammelbehälter zugeführt werden. Das Erhitzen erfolgt durch extremes Beheizen des Sorptionsbehälters, wobei die Beheizung elektrisch und/oder mittels eines Wärmeträgerkreislaufs erfolgen kann. Da bei einer Fahrzeug-Klimaanlage der geschilderte Prozeß möglichst kontinuierlich ablaufen soll, sind zumindest zwei Sorptionsbehälter vorgesehen. Jeweils abwechselnd erfolgt in einem der beiden Sorptionsbehälter der Sorptionsprozeß, während aus dem Sorptionsmittel des anderen Sorptionsbehälters das Arbeitsmittel ausgetrieben wird. Dabei muß das ausgetriebene Arbeitsmittel kontinuierlich wieder verflüssigt werden.

Aufgabe der Erfindung ist es daher, an einer Klimaanlage nach dem Oberbegriff des Anspruchs 1 Maßnahmen aufzuzeigen, mit Hilfe derer sicher und auf einfache Weise das ausgetriebene Arbeitsmittel kontinuierlich verflüssigt werden kann.
Zur Lösung dieser Aufgabe ist vorgesehen, daß die Arbeitsmittel-Leitungen in einer einen Wärmeübergang ermöglichenden Weise miteinander verbunden sind. Insbesondere führen die Arbeitsmittel-Leitungen über einen gemeinsamen Wärmetauscher. Vorteilhafte Aus- und Weiterbildungen der Erfindung beschreiben die Unteransprüche.

Erfindungsgemäß erfolgt ein Wärmetausch zwischen dem in den ersten Sorptionsbehälter einströmenden und dem aus dem zweiten Sorptionsbehälter ausgetriebenen Arbeitsmittel. Dieser Wärmetausch fördert die Kondensation des erhitzten, ausgetriebenen Arbeitsmittels. Zum verbesserten Wärmeübergang zwischen den beiden Arbeitsmittel-Leitungen sind diese bereichsweise einem Wärmetauscher ähnlich angeordnet bzw. führen direkt über einen gegenseitigen Wärmetauscher. Unter Ausnutzung der jeweiligen Arbeitsmittel-Aggregatzustände baut eine derartige Klimaanlage besonders kompakt, wenn der Verdampfer im wesentlichen geodätisch oberhalb der im wesentlichen nebeneinander angeordneten Sorptionsbehälter und/oder der Wärmetauscher der Arbeitsmittel-Leitungen im wesentlichen geodätisch oberhalb des Verdampfers angeordnet ist. Auch mit den Merkmalen des Anspruchs 4 nutzt eine erfindungsgemäße Klimaanlage die jeweiligen unterschiedlichen Aggregatzustände des Arbeitsmittels, wobei der Verdampfer zugleich die Funktion des Sammelbehälters für das verflüssigte Arbeitsmittel übernimmt. Anspruch 5 beschreibt hierfür eine einfache Schaltungsanordnung.

Bei der Aufnahme von Arbeitsmittel wird im Sorptionsmittel bzw. im Sorptionsbehälter Wärme frei, die entweder abgeführt werden muß oder in einem anderen Anwendungsfall einer erfindungsgemäßen Fahrzeug-Klimaanlage zur Beheizung des Fahrzeug-Innenraumes herangezogen werden kann. Der oben genannten DE 33 42 985 C2 ist zu entnehmen, daß eine oben beschriebene Fahrzeug-Klimaanlage einen hohen Bauaufwand erforderlich machen würde.

Um eine einfache, kompakte Anordnung für eine Fahrzeug-Klimaanlage zu erzielen, wird weiter vorgeschlagen, daß stromab der im wesentlichen nebeneinander angeordneten Sorptionsbehälter Verschlußorgane vorgesehen sind, um einen Luftstrom durch die Sorptionsbehälter entweder zu unterbinden oder in den Fahrzeug-Innenraum oder in die Umgebung zu leiten, und daß der im Fahrzeug-Innenraum mündende Luftkanal für den Verdampfer-Luftstrom mittels eines Verschlußorganes absperrbar ist.

Somit sind für die einzelnen in Luftkanälen geführten Luftströme durch die beiden Sorptionsbehälter sowie durch den Verdampfer Verschlußorgane vorgesehen, die beispielsweise als einfache Klappen ausgebildet sein können. Für jeden Sorptionsbehälter muß dabei eine Schaltung möglich sein, die es erlaubt, den Luftstrom entweder durch den Sorptionsbehälter in die Umgebung zu leiten - dies ist während des Sorptionsprozesses bei Kühlung des Fahrzeug-Innenraumes erforderlich - oder den Luftstrom durch den Sorptionsbehälter in den Fahrzeug-Innenraum zu führen - dies erfolgt während des Sorptionsprozesses bei einer Beheizung des Fahrzeug-Innenraumes -, oder jegliches Durchströmen des Sorptionsbehälters zu verhindern, da nur dann ein wirksames Austreiben des Arbeitsmittels durch eine externe Beheizung des Sorptionsbehälters möglich ist. Bevorzugt erfolgt diese externe Beheizung elektrisch und/oder mittels eines Wärmeträgerkreislaufes. Insbesondere kann dieser Wärmeträgerkreislauf durch die Kühlflüssigkeit des Fahrzeug-Antriebs gebildet werden. Eine erfindungsgemäße Fahrzeug-Klimaanlage ist besonders geeignet für den Einsatz in elektrisch angetriebenen Fahrzeugen, wobei eine elektrische Beheizung der Sorptionsbehälter mit einer Beladung der Antriebsbatterien des Fahrzeuges einhergehen kann und der Wärmeträgerkreislauf durch das Kühlöl des Elektromotors sowie der Batterien gebildet wird.

Insbesondere sind in jedem Sorptionsbehälter-Luftkanal stromab des Sorptionsbehälters zwei Klappen bzw. Verschlußorgane vorgesehen, von denen eine den Durchgang zum Fahrzeug-Innenraum freigibt oder unterbindet und eine weitere Klappe, die zwischen dem Sorptionsbehälter und der erstgenannten Klappe angeordnet ist, eine Austrittsöffnung in die Umgebung öffnet oder verschließt. Selbstverständlich ist es auch möglich, diese beiden einem Sorptionsbehälter zugeordneten Verschlußorgane in einem einzigen Steuerorgan baulich zusammenzufassen. Weiter gesteigert wird die kompakte Anordnung mit den Merkmalen des Anspruchs 2, wobei vorteilhafterweise keine separate Fördervorrichtung für das Arbeitsmittel erforderlich ist. Als externer Sammelbehälter für das kondensierte Arbeitsmittel fungiert gleichzeitig der Verdampfer, so daß das Arbeitsmittel während des Sorptionsprozesses allein durch die herrschenden Druckverhältnisse in den jeweiligen Sorptionsbehälter gefördert wird. Beim Austreiben aus dem Sorptionsbehälter hingegen nimmt das Arbeitsmittel einen gasförmigen Aggregatzustand an und gelangt somit geodätisch nach oben, wo es kondensiert und in verflüssigtem Zustand in den geodätisch ebenfalls oberhalb des Sorptionsbehälters angeordneten Verdampfer gelangt.

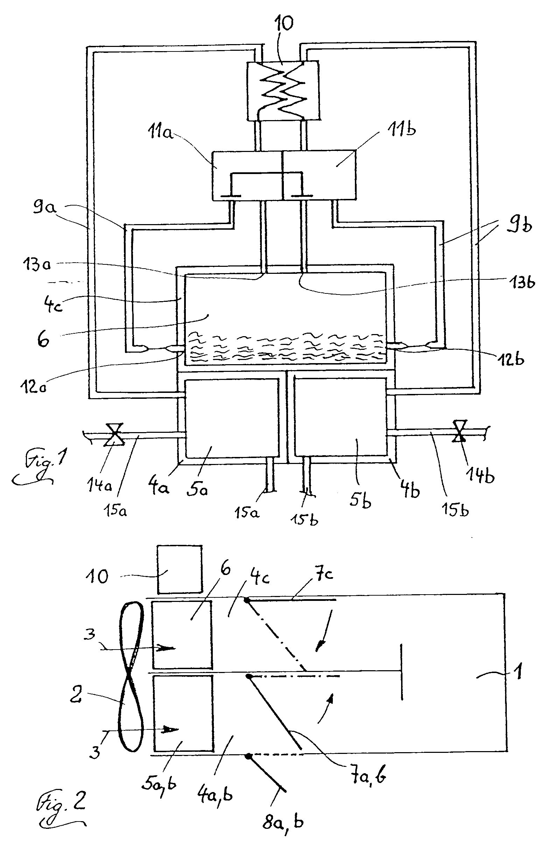

Anhand eines lediglich prinzipiell dargestellten Ausführungsbeispieles wird die Erfindung im folgenden näher beschrieben, wobei Fig. 1 eine Frontansicht und Fig. 2 eine Seitenansicht zeigt. Erfindungswesentlich können dabei sämtliche näher bezeichneten Merkmale sein.

Einem Fahrzeuginnenraum 1 soll mittels eines Gebläses 2 gemäß Pfeilrichtung 3 ein klimatisierter Luftstrom zugeführt werden. Hierfür verlaufen stromab des Gebläses 2 drei Luftkanäle 4a, 4b, 4c, die jeweils im Fahrzeug-Innenraum 1 münden.

Im Luftkanal 4a und im Luftkanal 4b ist jeweils ein luftdurchströmter, beheizbarer Sorptionsbehälter 5a, 5b angeordnet, während sich im Luftkanal 4c ein von Luft durchströmbarer Verdampfer-Wärmetauscher 6 befindet. Stromab des Verdampfers 6 befindet sich eine als Verschlußorgan 7c für den Luftkanal 4c ausgebildete Klappe, während die Luftkanäle 4a, 4b jeweils von einem klappenartigen Verschlußorgan 7a, 7b verschlossen werden können. Zwischen den Sorptionsbehältern 5a und 5b sowie den nachgeordneten Verschlußorganen 7a, 7b weist jeder Kanal 4a, 4b eine in der Umgebung mündende Austrittsöffnung auf, die von jeweils einem weiteren Verschlußorgan 8a, 8b verschlossen werden kann.

Die Sorptionsbehälter 5a, 5b sind mit Zeolith als Sorptionsmittel befüllt. Als Arbeitsmittel kommt Wasser bzw. Wasserdampfer zum Einsatz, das über Arbeitsmittel-Leitungen 9a, 9b geführt wird. Vom Sorptionsbehälter 5a führt die Arbeitsmittel-Leitung 9a durch einen Wärmetauscher 10 und mündet von diesem aus in Abhängigkeit von der Stellung eines Schaltventiles 11a entweder über eine untere Eintrittsöffnung 12 a oder über eine obere Austrittsöffnung 13a im Verdampfer 6. In gleicher Weise führt die Arbeitsmittel-Leitung 9b ausgehend vom Sorptionsbehälter 5b über den Wärmetauscher 10 zum Schaltventil 11b und mündet in Abhängigkeit von der Stellung dieses Schaltventiles 11b entweder in der oberen Austrittsöffnung 13b oder in der unteren Eintrittsöffnung 12 b des Verdampfers 6.

Ferner verläuft durch die Sorptionsbehälter 5a, 5b jeweils ein mittels eines Ventiles 14a, 14b absperrbarer Wärmeträgerkreislauf 15a, 15b zur wahlweisen Beheizung des jeweiligen Sorptionsbehälters 5. Die beschriebene Klimaanlage funktioniert somit wie folgt:

Soll dem Fahrzeug-Innenraum 1 ein gekühlter Luftstrom zugeführt werden, so befindet sich das Verschlußorgan 7c in der mit durchgezogenen Linien dargestellten Position, so daß der Luftkanal 4c geöffnet ist. Auch die Verschlußorgane 7a, 7b befinden sich in der in durchgezogenen Linien gezeigten Position und sperren somit die Kanäle 4a, 4b gegenüber dem Fahrzeug-Innenraum 1 ab.

Zunächst befindet sich das Verschlußorgan 8a in der mit durchgezogenen Linien dargestellten Position, während das Verschlußorgan 8b die strichliert dargestellte Position einnimmt. Während somit aus dem Luftkanal 4a ein vom Gebläse 2 geförderter und den Sorptionsbehälter 5a durchdringender Luftstrom in die Umgebung gelangen kann, wird der Sorptionsbehälter 5b nicht durchströmt, da der zugehörige Luftkanal 4b vollständig abgesperrt ist. Hingegen fördert das Gebläse 2 stets einen Luftstrom durch den Verdampfer 6.

Da im geschilderten Zustand der Sorptionsbehälter 5a von Luft durchströmt und somit abgekühlt wird, kann das darin befindliche Sorptionsmittel Arbeitsmittel, d. h. Wasserdampf aufnehmen. Dieser Wasserdampf wird aus der oberen Austrittsöffnung 13a des Verdampfers 6 abgezogen - hierfür befindet sich das Schaltventil 11a in der gezeigten Position - und gelangt über den Wärmetauscher 10 sowie die Arbeitsmittel-Leitung 9a in den Sorptionsbehälter 5a. Im Verdampfer 6 entsteht der Wasserdampf dabei aus dem am Boden des Verdampfers befindlichen verflüssigten Arbeitsmittel, d. h. Wasser. Mit dem Übergang dieses Wassers vom flüssigen in den gasförmigen Zustand wird im Verdampfer 6 dem unter Einfluß des Gebläses 2 hindurchströmenden Luftstrom Wärme entzogen, so daß erwünschtermaßen ein abgekühlter Luftstrom in den Fahrzeug-Innenraum gelangt.

Gleichzeitig wird der Sorptionsbehälter 5b über den Wärmeträgerkreislauf 15b bei geöffnetem Ventil 14b beheizt. Hierdurch wird das im Sorptionsbehälter 5b befindliche Wasser ausgetrieben und gelangt über die Arbeitsmittel-Leitung 9b in den Wärmetauscher 10. Durch den Wärmetausch mit der Arbeitsmittel-Leitung 9a kondensiert der ausgetriebene Wasserdampf und gelangt über das wie gezeigt geschaltete Schaltventil 11b zur unteren Eintrittsöffnung 12b des Verdampfers 6, wo es letztendlich dem Vorrat von verflüssigtem Arbeitsmittel hinzugefügt wird.

Ist der Sorptionsbehälter 5a vollständig mit Arbeitsmittel gefüllt und ist zugleich das Arbeitsmittel aus dem Sorptionsbehälter 5b vollständig ausgetrieben, so wird der Prozeß umgeschaltet. Die Schaltventile 11a, 11b werden dann in die andere nicht gezeigte Position gebracht, das Ventil 14a wird geöffnet und das Ventil 14b wird geschlossen. In diesem Stadium nimmt der Sorptionsbehälter 5b Arbeitsmittel auf, das im Verdampfer 6 unter Wärmeaufnahme von dem hindurchtretenden Luftstrom in den gasförmigen Zustand überwechselte. Gleichzeitig wird der Sorptionsbehälter 5a beheizt und somit das darin befindliche Arbeitsmittel ausgetrieben. Selbstverständlich werden für diesen Prozeß die Verschlußorgane 8a, 8b in die jeweils andere Position gebracht, so daß nunmehr der Luftkanal 4a des nunmehr beheizten Sorptionsbehälters 5a geschlossen ist, während der Sorptionsbehälter 5b durch den über das nunmehr geöffnete Verschlußorgan 8b austretenden Luftstrom gekühlt wird.

Die beiden oben beschriebenen Zustände liegen bei einer Kühlung des Fahrzeug-Innenraumes 1 vor. Soll hingegen der Fahrzeug-Innenraum 1 beheizt werden, so wird zunächst der Luftkanal 4c des Verdampfers 6 durch das Verschlußorgan 7c (strich-punktierte Position) verschlossen. Gleichzeitig werden die beiden Verschlußorgane 7a, 7b ebenfalls in die strich-punktierte Position gebracht, so daß die Luftkanäle 4a, 4b im Fahrzeug-Innenraum 1 münden. Die beiden Verschlußorgane 8a, 8b nehmen dann die die Luftkanäle 4a, 4b gegenüber der Umgebung abschließende Position ein.

Vor Inbetriebnahme des Fahrzeuges, das insbesondere als elektrisch angetriebenes Fahrzeug ausgebildet ist, wurden die beiden Sorptionsbehälter 5a, 5b mittels einer nicht gezeigten elektrischen Heizvorrichtung - diese kann direkt oder über den Wärmeträgerkreislauf einwirken - beheizt, so daß aus beiden Sorptionsbehältern 5a, 5b das darin befindliche Arbeitsmittel ausgetrieben wurde. Parallel zueinander oder zeitlich nacheinander können durch entsprechende Ansteuerung der Schaltventile 11a, 11b nunmehr die beiden Sorptionsbehälter 5a, 5b dampfförmiges Arbeitsmittel aufnehmen und geben hierbei Wärme ab, die bei der beschriebenen Position der Verschlußorgane 7a, 7b, 7c, 8a, 8b über den vom Gebläse 2 geförderten Luftstrom in den Fahrzeug-Innenraum 1 gelangt. Eine Beheizung des Fahrzeug-Innenraumes 1 ist jedoch auch dann möglich, wenn die beiden Sorptionsbehälter 5a, 5b vollständig mit Arbeitsmittel geladen sind. Zum einen können hierbei die beiden Sorptionsbehälter 5a, 5b als Wärmetauscher wirken, wenn diese jeweils vom Wärmeträgerkreislauf 15a, 15b durchströmt werden. Es ist aber auch möglich, den oben geschilderten Prozeß des alternierenden Austreibens bzw. Aufnehmens von Arbeitsmittel durchzuführen, wobei abweichend von der obigen Schilderung die bei der Sorption in jedem Sorptionsbehälter 5a, 5b freiwerdende Wärmemenge in den Fahrzeug-Innenraum 1 gelangt.

Die gezeigte Fahrzeug-Klimaanlage nach dem Sorptionsprinzip hat den Vorteil, daß bei einer einfachen Anordnung sowohl eine Abkühlung als auch eine Beheizung des Fahrzeug-Innenraumes kontinuierlich möglich ist. Die gezeigte Anordnung baut äußerst kompakt und macht sich hierbei die unterschiedlichen Aggregatzustände des Sorptions-Arbeitsmittels zu nutze. Die Sorptionsbehälter 5a, 5b übernehmen gleichzeitig die Funktion eines Wärmetauschers, während der Verdampfer 6 gleichzeitig als Reservoir für verflüssigtes Arbeitsmittel dient. Der Wärmetauscher 10 zwischen den Arbeitsmittel-Leitungen 9a, 9b ist einer schnellen kontinuierlichen Kondensation des zu verflüssigenden Arbeitsmittels förderlich, wobei aufgrund der gezeigten Anordnung - d. h. der Wärmetauscher 10 liegt oberhalb des Verdampfers 6 und dieser oberhalb der Sorptionsbehälter 5a, 5b - keine Fördervorrichtung für das Arbeitsmittel erforderlich ist. Vielmehr erfolgt dessen Transport allein unter Schwerkrafteinfluß bzw. unter Ausnutzung der bei der Sorption herrschenden Druckverhältnisse, da das das Arbeitsmittel anlagernde Sorptionsmittel das Arbeitsmittel förmlich aus dem Verdampfer 6 absaugt. Auch zeichnet sich die gezeigte Anordnung der einzelnen Elemente durch eine äußerst kompakte Bauweise aus, wobei lediglich eine geringe Anzahl von Klappen bzw. Verschlußorganen 7, 8 erforderlich ist, um eine Vielzahl von Funktionen realisieren zu können. Detaillierte konstruktive Ausführungsformen können dabei durchaus abweichend vom gezeigten, lediglich prinzipiell dargestellten Ausführungsbeispiel gestaltet sein, ohne den Inhalt der Patentansprüche zu verlassen.

**Patentansprüche**

1. Klimaanlage, insbesondere für Fahrzeuge, nach dem Sorptionsprinzip, mit zumindest zwei beheizbaren, von einem Luftstrom beaufschlagten Sorptionsbehältern (5a, 5b) sowie einem mit diesen über Arbeitsmittel-Leitungen (9a, 9b) verbundenen, ebenfalls luftdurchströmten Verdampfer (6) für das Sorptions-Arbeitsmittel,
dadurch gekennzeichnet, daß die Arbeitsmittel-Leitungen (9a, 9b) in einer einen Wärmeübergang ermöglichenden Weise miteinander verbunden sind.

2. Klimaanlage nach Anspruch 1,
dadurch gekennzeichnet, daß der Verdampfer (6) im wesentlichen geodätisch oberhalb der im wesentlichen nebeneinander angeordneten Sorptionsbehälter (5a, 5b) angeordnet ist.

3. Klimaanlage nach Anspruch 1 oder 2,
dadurch gekennzeichnet, daß ein gemeinsamer Wärmetauscher (10) der Arbeitsmittel-Leitungen (9a, 9b) im wesentlichen geodätisch oberhalb des Verdampfers (6) angeordnet ist.

4. Klimaanlage nach einem der Ansprüche 1 bis 3,
dadurch gekennzeichnet, daß der Verdampfer (6) jeweils eine untere Eintrittsöffnung (12, 12b) für das vom ersten oder zweiten Sorptionsbehälter (5a, 5b) ausgetriebene Arbeitsmittel und jeweils eine obere Austrittsöffnung (13a, 13b) für das gleichzeitig im zweiten oder ersten Sorptionsbehälter (5b, 5a) aufzunehmende Arbeitsmittel aufweist.

5. Klimaanlage nach Anspruch 4,
dadurch gekennzeichnet, daß in den Arbeitsmittel-Leitungen (9a, 9b) zwischen dem Wärmetauscher (10) und dem Verdampfer (6) Schaltventile (11a, 11b) vorgesehen sind, die die Verdampfer-Eintrittsöffnung (12a, 12b) oder die Verdampfer-Austrittsöffnung (13a, 13b) freigeben.

6. Klimaanlage nach einem der Ansprüche 1 bis 5,
dadurch gekennzeichnet, daß stromab der im wesentlichen nebeneinander angeordneten Sorptionsbehälter (5a, 5b) Verschlußorgane (7a, 7b, 8a, 8b) vorgesehen sind, um einen Luftstrom durch die Sorptionsbehälter (5a, 5b) entweder zu unterbinden oder in den Fahrzeug-Innenraum (1) oder in die Umgebung (Verschlußorgane 8a, 8b) zu leiten, und daß der im Fahrzeug-Innenraum (1) mündende Luftkanal (4c) für den Verdampfer-Luftstrom mittels eines Verschlußorganes (7c) absperrbar ist.

7. Klimaanlage nach einem der Ansprüche 1 bis 6,
dadurch gekennzeichnet, daß die Sorptionsbehälter (5a, 5b) elektrisch und/oder mittels eines Wärmeträgerkreislaufes (15a, 15b) beheizbar sind.

8. Fahrzeug-Klimaanlage nach einem der Ansprüche 1 bis 7,
dadurch gekennzeichnet, daß der Wärmeträgerkreislauf (15a, 15b) durch das Kühlöl des Fahrzeug-Elektroantriebs gebildet wird.

Fig. 1

Fig. 2